# EUROPEAN PATENT APPLICATION

(11) **EP 3 614 195 A1**
(43) Date of publication of application: **26.02.2020**
(21) Application number: 19163414.6
(22) Date of filing: 18.03.2019
(51) Int. Cl.: G02C 11/00

(54) **EYEGLASSES WITH INTERCHANGEABLE POWER SOURCE AND HEARING DEVICE**

(30) Priority: 23.08.2018 US 201862721634 P; 15.03.2019 US 201916355313
(71) Applicant: De La Fuente, Carlos, San Diego, CA 92101 (US)
(72) Inventor: De La Fuente, Carlos, San Diego, CA 92101 (US)
(74) Representative: Schaumburg und Partner Patentanwälte mbB

(57) **Abstract**

A specialized hearing and viewing aid device that is incorporated within a pair of ergonomically designed eyeglasses for enhancing the user's senses. Among its features are one or more of wireless communication capabilities, interchangeable rechargeable power source, and interchangeable lens.

## Description

### Field of the Invention

The present invention relates to a specialized hearing aid device that is incorporated within a pair of ergonomically designed eyeglasses for enhancing the user's senses. Among its features are its blue tooth capabilities, interchangeable rechargeable power source, and interchangeable lens.

### Background of the Invention

People's need and sensitivity for use of sense enhancing devices to become more aware of their environment has grown considerably. Typically, where sunglasses or prescription glasses are used for the eyes they cannot be replaced without also replacing the frames. Having several prescribed eye glass frames for different viewing can be an expensive proposition. If the user desires different designed frames or color schemes they must also provide another set of lenses. For every set of new frames chosen a matching pair of lenses is also required. The present invention provides an alternative means of solving this problem in combination with the ensuing enhancement to provide a novel solution.

As people become more sensitive to their appearances better designed enhancing devices have developed. Better enhancing means also require more power and the need to be more efficient. Frequent charging is an important consideration to the user. Bluetooth is one of those emerging technologies that helps solve this problem. What Bluetooth technology does that is unique is that it provides a means of transmitting wireless data to a sound producing device, which can be very efficient in size. While the present invention is not claiming to invent Bluetooth, it does enhance the user's use of sound by presenting a unique means of providing power.

An important consideration of any device is its time constraint of usage. It must be efficient and provide a means of quickly charging or providing power because power requirements and length of usage limit a sensing device's usage. Therefore, the better the power capabilities of the device, the longer the usage and benefit to the user. The present invention solves this problem by providing a novel means of limitlessly interchanging its power source and lenses.

There remains a need in the field for a multifunctional device that efficiently and practically has the capability to provide limitlessly interchangeable extended power, and a means of replacing limitless lens to frames for cosmetic or prescribed purposes.

### Summary of the Invention

An object of the present invention is to provide a hearing means with extended use that can be worn comfortably having the ability to have its lens limitlessly replaced. The lens is not limited to, but may include, a prescribed lens and a UV-type sunglass lens. Its uniqueness lies in its ability to have its attachment arms easily replaced, and, thus, providing additional functions, not limited to, but including, a rechargeable power sources to the user. Among those options, but not limited to, is the ability to add an additional ear piece or to add a USB connection that may be used to introduce sound to the hearing ear piece. Its interchangeable arm is also a rechargeable battery pack that can be easily replaced to provide the user with longer usage. The present device has an attachable and detachable speaker earpiece that is held in place by a magnet and magnet post retainer. It allows the user to wear the glasses without the need of physically placing them in one's ear. Not limited to, but included, the device provides the ability to add an additional speaker earpiece so a second user may listen to the same sound or to attach itself to the second ear. Additionally, the device has the ability to connect through Bluetooth.

The device lens and power source are removable, and exchangeable, having glasses that can be interchanged as either sunglasses or reading glasses. The arms are interchangeable and replaceable. The arm consists of a magnetic earpiece holder that allows the ear piece to be held in place magnetically, allowing the user not to use them or to place the speaker earpiece in the user's ear. The present invention also has a Bluetooth connectivity that allows the user to connect to any Bluetooth phone and control the phone from a distance just by touching the buttons on the arms of the frame. The glasses are not limited to, but can be made of, TR90 plastic which is extremely resistant.

There is a need in the field for a device that can provide prolonged hearing ability, limitless detachable/interchangeable arms and a unique means of holding the speaker earpiece in place with the optional ability to add a second speaker earpiece. Further features and embodiments will become apparent from the description and the accompanying drawings and the detailed description of the preferred embodiments which follow.

Another aspect of the invention involves eyeglasses comprising eyeglasses frame including a pair of temples; one or more speaker earpieces carried by at least one of the temples; and at least one of the temples includes a rechargeable battery that powers the one or more speaker earpieces.

One or more implementations of the aspect of the invention described immediately above includes one or more of the following: at least one of the temples is a detachable arm that is replaceable with a replacement detachable arm including a rechargeable battery to provide a user with longer usage of the one or more speaker earpieces; the detachable arm includes a power switch to turn on and off power supplied by the rechargeable battery, and a power indicator; the one or more speaker earpieces are attachably and detachably coupled to at least one of the temples; the one or more speaker earpieces are magnetically attachably and detachably coupled to at least one of the temples; the one or more speaker earpieces include a second speaker earpiece, and at least one of the temples includes a connector to attachably and detachably couple the second speaker earpiece to at least one of the temples; the connector is configured as a mini USB connection to introduce sound to the one or more speaker earpieces; at least one of the temples includes a magnetically holdable earpiece device comprising a first couple member and a second couple member having a speaker earpiece, and the first couple member and the second couple member are magnetically and mechanically attachable and detachable to each other; the first couple member and the second couple member having a male and female mechanical coupling; at least one of the temples is wirelessly communicable via a Bluetooth connection with a sound source; two or more replaceable lenses and a mating locking mechanism to attachably and detachably couple the two or more replaceable lenses to the eyeglass frame; the two or more replaceable lenses include at least clear lenses and shaded lenses; and/or at least one of the temples is a detachable arm, the eyeglass frame includes a rim, a bridge, end pieces, and a coupling segment that couples the detachable arm to at least one of the end pieces.

### Brief Description of Drawings

The preferred embodiments of the invention will hereinafter be described in conjunction with the appended drawings provided to illustrate and not to limit the invention, in which:
FIG. 1A presents a perspective view of an exemplary embodiment of the specialized detachable, interchangeable, rechargeable, Bluetooth glasses ("**S.D.I.R.B.G**").
FIG.1B presents an isometric view of the exemplary embodiment of the specialized **S.D.I.R.B.G,** displaying the detachable arm.
FIG.1C presents a perspective view of the S.D.I.R.B.G. whereby an additional hearing aid may be attached.
FIG. 2A presents a perspective view of the detachable arm of the **S.D.I.R.B.G.**
FIG. 2B presents a perspective view of the ear hearing attachment feature.
FIG. 3A presents a perspective view of an embodiment of specialized glasses that provided amplified sound.
FIG. 3B illustrates a perspective bottom view of the **S.D.I.R.B.G** with its charging port/secondary hearing port and power/ communication port.
FIG 4 illustrates a perspective view of the **S.D.I.R.B.G.** detachable rechargeable battery.
FIG. 5 Illustrates a perspective view of the **S.D.I.R.B.G** with its glasses removed.
FIG.6A illustrates a perspective view of the **S.D.I.R.B.G** in its normal use mode.
FIG. 6B illustrates a perspective view of the **S.D.I.R.B.G** with its detachable lens.
FIG. 6C illustrates a perspective view of the attachable segment.
FIG. 6D illustrates a perspective view of the **S.D.I.R.B.G.** replaceable lens.

While the various features of this invention are hereinafter described and illustrated as being particularly adapted for providing rigidity to instrument devices the invention is not limited to the embodiments illustrated in the drawings but are merely used to illustrate the wide variety of uses of this invention. Therefore, the foregoing is considered as illustrative only of the principles of the invention. Since numerous modification and changes will readily occur by those skilled in the art, it is not desired to limit the invention to the exact construction and operation shown and described and accordingly, all suitable modifications and equivalents may be resorted to, falling within the scope of the invention.

### Description of Embodiment of the Invention

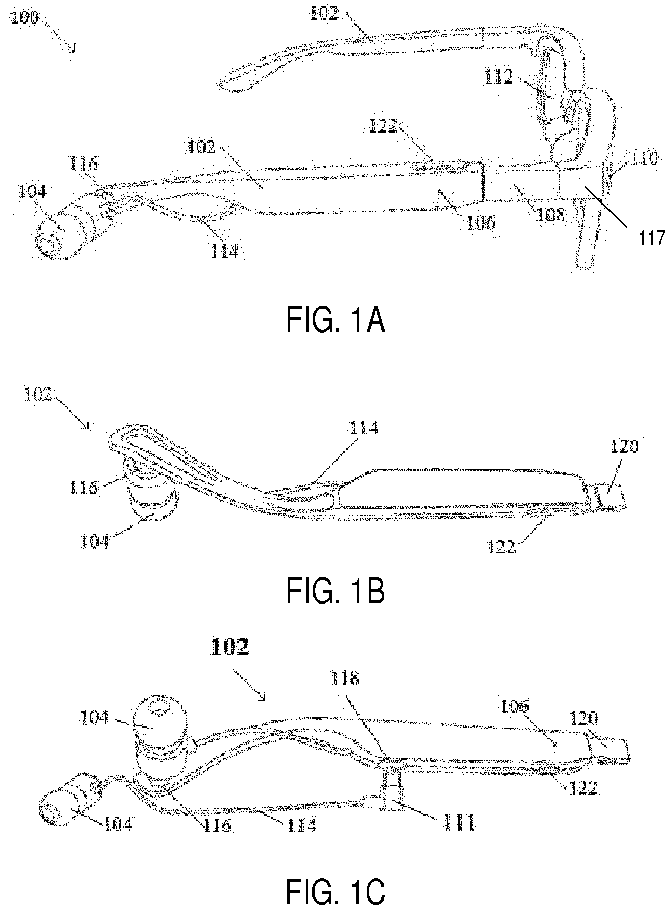

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper", "lower", "left", "rear", "right", "front", "vertical", "horizontal", and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

With respect to FIG. 1A presents a perspective view of an exemplary embodiment of a specialized detachable, interchangeable, rechargeable, Bluetooth glasses **("S.D.I.R.B.G.")** (100). The preferred embodiment is not limited to, but having, two detachable arms (102) one of which typically has a sound-emitting hearing earpiece (104) with a speaker therein for emanating sound (e.g., voice, music, etc.) and/or amplifying sound. The arm (102) also contains a rechargeable battery source embedded in the arm (102) body. A power button (122) is used to activate the embodiment. A power indicator (106) is used to let the user know that the S.D.I.R.R.G (100) is in the on position. A coupling segment (108) is used to connect the arm (102) to the main body and the LED (110). A specialized magnet (116) configuration is used to maintain the speaker earpiece (104) to the arm (102). A power communication wire (114) is used to provide sound and power to the speaker earpiece (104). Lens (112) may be prescribed or used as sunglasses with UV ratings.

With respect to FIG. 1B, the coupling rechargeable arm (102) is illustrated showing the inside appearance of the arm (102). The attachable arm connecting tab (120) displayed may be used to attach itself to the coupling segment (108), and those form part of the S.D.I.R.R.G. (100).

With respect to FIG. 1C, a perspective view of the arm (102) segment is displayed with an optional ear hearing piece (111). This optional hearing piece (111) is connected to charging port (118) where it receives its power and sound information.

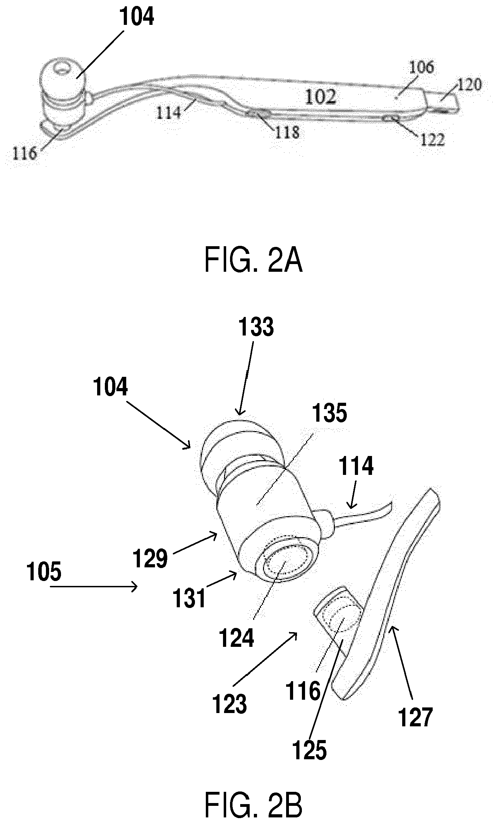

With respect to FIG. 2A, a side perspective view of the arm (102) is illustrated. The location of magnet (116) is displayed attached to the arm (102) and the ear hearing piece (104).

With respect to FIG. 2B, a magnetically holdable (magnetically attachable and detachable) earpiece device (105) is illustrated having the magnet (116) housed within a cylindrical stem/post retainer (125) of a male/first couple member/post retainer (123) that extends from temple tip (127) and magnet metal (124) housed within a cylindrical recess member (135) of second couple member (129) at an end (131) of second/female couple member (129) opposite of earpiece insert (133) to help hold the speaker earpiece (104) in place while the S.D.I.R.R.G (100) are used. This also permits the user to have the feel of eyeglasses while still having the ability to listen to sound. In alternative embodiments of the magnetically holdable earpiece device (105), the first couple member (123) and/or the second couple member (129) includes a magnet, and/or the first couple member (123) is a female couple member and receives the second couple member (129), which is a male couple member.

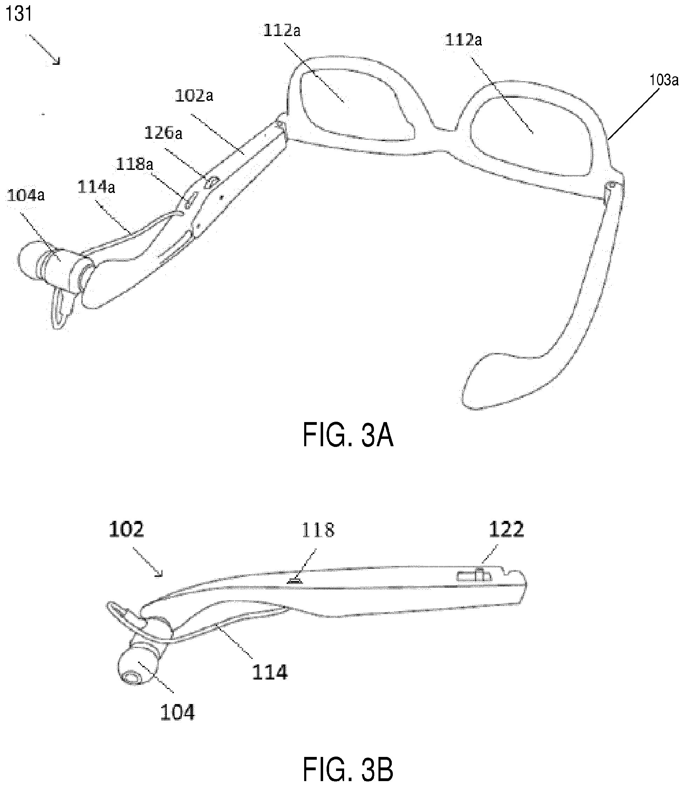

With respect to FIG. 3A, an embodiment of specialized glasses (131) that provided amplified sound is illustrated. Similar elements to those shown and described herein will be identified with a like reference number, but with an "a" suffix. The glasses (131) include a frame (103a) with lenses (112a) and arms/temples (102a), which are not attachable/detachable. The temple(s) (102a) include one more circuits (e.g., sound amplifying circuit(s) to amplify sound received via a microphone near where arm(s) (102a) connects to frame (103a). The microphone is electrically coupled to speaker earpiece (104a) through one or more circuits and wire (114a) to provide amplified sound to the speaker earpiece (104a). The temple(s) (102a) includes a charging port/secondary hearing port (118a) and a volume control (126a).

With respect to FIG. 3B, a perspective bottom view of the **S.D.I.R.B.G** (100) is illustrated with its charging port/secondary hearing port (118) and power/ communication port (118) and power button/switch (122) are shown.

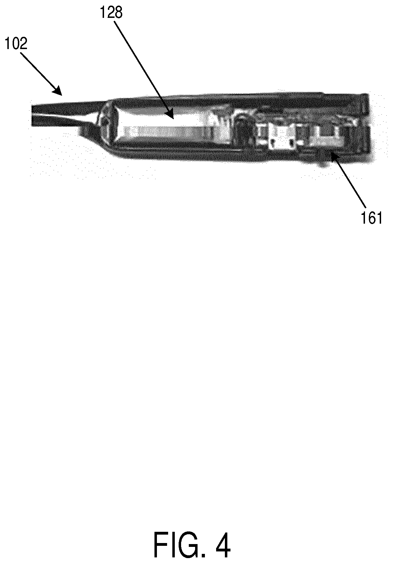

With respect to FIG. 4, an illustrated view of the detachable rechargeable battery (128) in the arm (102) is depicted, not limited to, but including additional circuitry/one or more circuits (161) for one or more functions described herein.

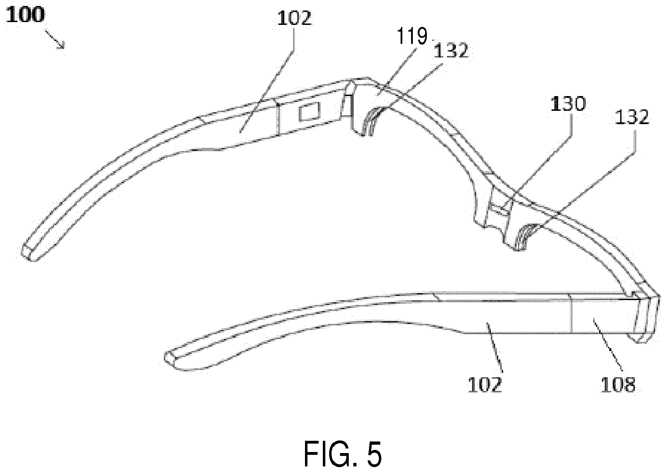

With respect to FIG. 5, the base assembly of the S.D.I.R.B.G. (100) is illustrated having a detachable arm locking mechanism (130) and a lens holder (132) receptacle. In this illustration the lens features are emphasized. Shaded lens not shown or prescribed clear lenses may be inserted into the lens holder (132).

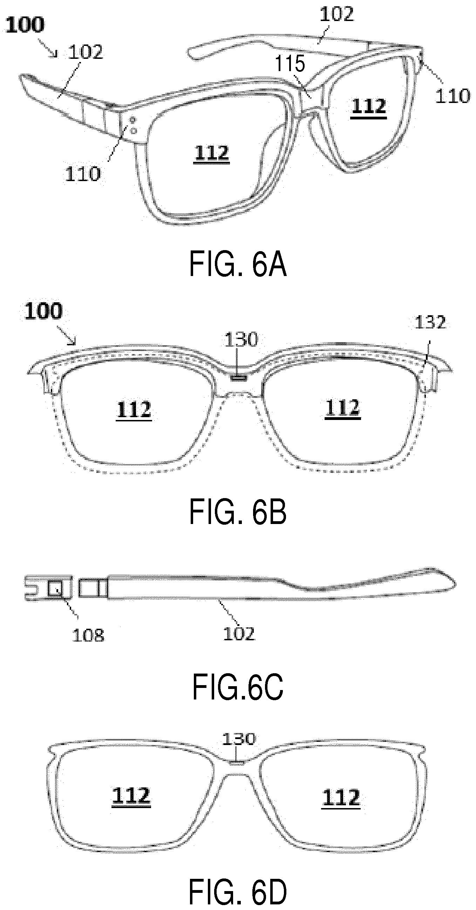

With respect to FIG. 6A, a frontal view of the S.D.I.R.B.G. (100) is illustrated.

With respect to FIG. 6B, lenses (112) are shown fully inserted into the lens holder (132) and held in place by the detachable arm locking mechanism (130).

With respect to FIG. 6C, a coupling segment (108) is shown with the arm (102).

With respect to FIG. 6D, a detachable lens (112) is illustrated with its mating locking mechanism (130). It should be noted that the lens frames used are not limited to color or material used.

The above figures may depict exemplary configurations for the invention, which is done to aid in understanding the features and functionality that can be included in the invention. The invention is not restricted to the illustrated architectures or configurations but can be implemented using a variety of alternative architectures and configurations. Additionally, although the invention is described above in terms of various exemplary embodiments and implementations, it should be understood that the various features and functionality described in one or more of the individual embodiments with which they are described, but instead can be applied, alone or in some combination, to one or more of the other embodiments of the invention, whether or not such embodiments are described and whether or not such features are presented as being a part of a described embodiment. Thus, the breadth and scope of the present invention, especially in the following claims, should not be limited by any of the above-described exemplary embodiments.

Terms and phrases used in this document, and variations thereof, unless otherwise expressly stated, should be construed as open ended as opposed to limiting. As examples of the foregoing: the term "including" should be read as mean "including, without limitation" or the like; the term "example" is used to provide exemplary instances of the item in discussion, not an exhaustive or limiting list thereof; and adjectives such as "conventional," "traditional," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although item, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent.

## Claims

1. Eyeglasses (100), comprising:
eyeglasses frame (103a) including a pair of temples (102a);
one or more speaker earpieces (104a) carried by at least one of the temples,
wherein at least one of the temples includes a rechargeable battery (128) that powers the one or more speaker earpieces.

2. The eyeglasses of claim 1, wherein at least one of the temples is a detachable arm that is replaceable with a replacement detachable arm including the rechargeable battery to provide a user with longer usage of the one or more speaker earpieces.

3. The eyeglasses of claim 2, wherein the detachable arm includes a power switch (122) to turn on and off power supplied by the rechargeable battery, and a power indicator (106).

4. The eyeglasses of claims 1-3, wherein the one or more speaker earpieces are attachably and detachably coupled to at least one of the temples.

5. The eyeglasses of claim 4, wherein the one or more speaker earpieces are magnetically attachably and detachably coupled to at least one of the temples.

6. The eyeglasses of claims 1-5, wherein the one or more speaker earpieces include a second speaker earpiece (104), and at least one of the temples includes a connector (118) to attachably and detachably couple the second speaker earpiece to at least one of the temples.

7. The eyeglasses of claim 6, wherein the connector is configured as a mini USB connection to introduce sound to the one or more speaker earpieces.

8. The eyeglasses of claims 1-7, wherein at least one of the temples includes a magnetically holdable earpiece device (105) comprising a first couple member (123) and a second couple member (129) having a speaker earpiece (104), and the first couple member and the second couple member are magnetically and mechanically attachable and detachable to each other.

9. The eyeglasses of claim 8, wherein the first couple member and the second couple member having a male and female mechanical coupling.

10. The eyeglasses of claims 1-9, wherein at least one of the temples is wirelessly communicable via a Bluetooth connection with a sound source.

11. The eyeglasses of claims 1-10, further including two or more replaceable lenses (112) and a mating locking mechanism (130) to attachably and detachably couple the two or more replaceable lenses to the eyeglass frame.

12. The eyeglasses of claim 11, wherein the two or more replaceable lenses include at least clear lenses and shaded lenses.

13. The eyeglasses of claims 1-12, wherein at least one of the temples is a detachable arm, the eyeglass frame includes a rim, a bridge, end pieces, and a coupling segment that couples the detachable arm to at least one of the end pieces.
